# EUROPÄISCHE PATENTSCHRIFT

(11) **EP 1 740 353 B1**
(45) Veröffentlichungstag und Bekanntmachung des Hinweises auf die Patenterteilung: **26.03.2008**
(21) Anmeldenummer: 05741345.2
(22) Anmeldetag: 18.04.2005
(51) Int. Cl.: B25J 19/06

(54) **ÜBERLASTSCHUTZEINRICHTUNG MIT ELEKTRISCHER SCHALTEINRICHTUNG**
OVERLOAD PROTECTION DEVICE COMPRISING AN ELECTRIC SWITCHING UNIT
DISPOSITIF DE PROTECTION CONTRE LES SURCHARGES COMPORTANT UN DISPOSITIF DE COMMUTATION ELECTRIQUE

(30) Priorität: 19.04.2004 DE 102004021000
(43) Veröffentlichungstag der Anmeldung: 10.01.2007
(73) Patentinhaber: Schunk GmbH & Co. KG Spann- und Greiftechnik, 74348 Lauffen (DE)
(72) Erfinder: WINKLER, Ralf, 74226 Nordheim (DE); FELLHAUER, Bruno, 74336 Brackenheim (DE); KURZ, Friedrich, 74226 Nordheim (DE)
(74) Vertreter: Bulling, Alexander
(86) Internationale Anmeldenummer: PCT/EP2005/004085
(87) Internationale Veröffentlichungsnummer: WO 2005/099974

(56) Entgegenhaltungen:
- US-A- 4 954 005
- US-A- 5 839 557
- US-A- 6 069 415

## Beschreibung

Die Erfindung betrifft eine Überlastschutzeinrichtung gemäß dem Oberbegriff des Anspruchs 1.

Eine solche überlastschutzeinrichtung ist zum Beispiel aus der US-A-5 839 557 bekannt.

Überlastschutzeinrichtungen sind aus dem Stand der Technik bekannt und werden bei fremdkraftbetriebenen Handhabungsgeräten, beispielsweise bei achs- oder bahngesteuerten Industrierobotern, zur Vermeidung von Schäden bei Kollisionen im Rahmen von Bewegungen zwischen dem Handhabungsgerät und Gegenständen in der Umgebung des Handhabungsgerätes eingesetzt. Dazu weist eine Überlastschutzeinrichtung ein Gehäuse auf, dass an dem Handhabungsgerät, beispielsweise an einem Aufnahmeflansch eines Roboterarms, befestigt werden kann. An dem Gehäuse ist ein Werkzeughalter, beispielsweise in Form eines Werkzeugflansches, vorgesehen, der zur Aufnahme von Handhabungswerkzeugen, beispielsweise Greifeinrichtungen, Bearbeitungseinrichtungen, Messeinrichtungen, ausgebildet ist. Der Werkzeughalter ist dabei beweglich mit dem Gehäuse verbunden, so dass eine Relativbewegung zwischen dem Gehäuse und dem Werkzeughalter, insbesondere in Form einer Auslenkung des Werkzeughalters, ermöglicht ist. Dabei können lineare und/oder rotatorische Relativbewegungen abhängig von einem Anwendungsbereich der an dem Werkzeughalter angebrachten Handhabungswerkzeuge vorgesehen sein. Die Relativbewegungen können durch konstruktive Gegebenheiten des Gehäuses und des daran angebrachten Werkzeughalters begrenzt sein. Um unerwünschte Relativbewegungen zu verhindern, ist eine Vorspanneinrichtung vorgesehen, die zwischen dem Gehäuse und dem Werkzeughalter eine Vorspannkraft aufbringt, so dass eine Relativbewegung erst bei Überwindung der Vorspannkraft stattfinden kann. Somit tritt bei einer Kollision des Handhabungswerkzeugs mit einem Gegenstand zunächst nur eine durch eine Höhe der Vorspannkraft bestimmte Kollisionskraft auf. Da gegebenenfalls nicht ausgeschlossen werden kann, dass ein zur Verfügung stehender Bewegungsspielraum der Relativbewegung zwischen Gehäuse und Werkzeughalter ausreicht, um die von dem Handhabungsgerät ausgeführte Bewegung vollständig abzufangen, ist zwischen dem Gehäuse und dem Werkzeughalter eine Schalteinrichtung vorgesehen, die bei einer Mindestauslenkung des Werkzeughalters gegenüber dem Gehäuse ein Schaltsignal erzeugt, das an eine Steuerungseinrichtung des Handhabungsgeräts weitergeleitet werden kann, um die Bewegungen des Handhabungsgeräts zu stoppen und gegebenenfalls in entgegengesetzter Richtung zu verfahren.

Eine bekannte Ausführungsform einer Überlastschutzeinrichtung ist das Modell OPS 80 der Anmelderin, die in gängigen Katalogmaterialien dargestellt ist. Der OPS 80 weist ein zylindrisches Gehäuse mit Befestigungsbohrungen für eine Montage an einen Industrieroboter auf. An dem zylindrischen Gehäuse ist ein ebenfalls zylindrischer Werkzeughalter angebracht, der linear verschieblich und drehbar befestigt ist. Der Werkzeughalter kann über einen Druckkolben oder über Federmittel mit einer Vorspannkraft beaufschlagt werden und ermöglicht somit die Übertragung eines konstruktiv begrenzten Drehmoments bzw. einer entsprechenden Kraft, was zur Benutzung eines an dem Werkzeughalter angebrachten Werkzeugs notwendig ist. An einer dem Werkzeughalter zugewandten Stirnseite des Gehäuses sind jeweils um 120 Grad versetzt angeordnete Näherungsschalter angeordnet, die im Fall einer Kollision und einer dadurch bewirkten Annäherung des Werkzeughalters an das Gehäuse ein Schaltsignal auslösen können und somit die Bewegungen des Handhabungsgeräts stoppen können.
Aus der US 4,717,003 ist eine Überlastschutzeinrichtung bekannt geworden, die zur Erzeugung einer Vorspannkraft Federelemente vorsieht. Über Sensoren wird dabei der Abstand zwischen dem Gehäuse und einer Werkzeugplatte bestimmt. Wird ein vorgegebener Abstand überschritten, so wird ein Signal ausgegeben.

Aus der DD 252 512 A3 ist ein Adapter mit Kollisionsschutz bekannt geworden, der ein Grundgehäuse vorsieht. Im Grundgehäuse ist ein Druckvolumen angeordnet, das mittels einer Membran abgedichtet ist. Bei Abheben eines Flansches von Arretierungsmitteln wird über einen Sensor ein Signal abgegeben.

Die der Erfindung zugrundeliegende Aufgabe besteht darin, eine Überlastschutzeinrichtung der eingangs genannten Art zu schaffen, die einen vereinfachten konstruktiven Aufbau und eine verbesserte Variabilität ermöglicht.

Diese Aufgabe wird durch eine Schalteinrichtung mit den Merkmalen des Anspruchs 1 gelöst.

Dadurch kann eine unmittelbare elektrische Kopplung zwischen den einander zugewandten Oberflächenabschnitten des Gehäuses und des Werkzeughalters bewirkt werden, wodurch die Schalteinrichtung gegenüber dem Stand der Technik erheblich vereinfacht werden kann. Die Schaltfläche kann dabei alternativ dem Gehäuse oder dem Werkzeughalter zugeordnet sein, das Kontaktelement ist jeweils am korrespondierend gegenüberliegenden Oberflächenabschnitt vorgesehen. Sobald sich im Fall einer Kollision durch die Relativbewegung zwischen dem Gehäuse und dem Werkzeughalter die Oberflächenabschnitte voneinander entfernen, wird ein elektrischer Kontakt zwischen der Schaltfläche und dem Kontaktelement unterbrochen, wodurch ein Schaltsignal hervorgerufen werden kann.

Gemäß der Erfindung ist die Vorspanneinrichtung als Kolbenanordnung ausgeführt und mit einem Medium beaufschlagbar ausgebildet. Das Gehäuse bildet dabei einen Zylinder, in dem die als Kolbenanordnung ausgeführte Vorspanneinrichtung beweglich angebracht ist und in den insbesondere flüssiges und/oder gasförmiges Medium einbringbar ist. Durch das Medium kann in dem Zylinder eine Druckkraft aufgebracht werden, die zu einer Vorspannung auf die Kolbenanordnung führt, wobei ein Kolben insbesondere unmittelbar mit dem Werkzeughalter verbunden ist, so dass durch die Druckkraft des Mediums eine variable Vorspannkraft für den Werkzeughalter verwirklicht werden kann.

Dabei ist der Werkzeughalter über einen Druckkolben mit der Vorspannkraft beaufschlagbar, wobei das Kontaktelement als den Druckkolben abdichtendes Dichtelement ausgebildet ist. Dadurch kann eine Anpassung der Vorspannkraft an einen Anwendungsbereich der Überlastschutzeinrichtung vorgenommen werden. Ist beispielsweise ein besonders empfindliches Werkzeug an dem Werkzeughalter angebracht, so kann durch eine geringe Druckbeaufschlagung des Druckkolbens eine geringe Vorspannkraft vorgesehen werden, damit bereits bei niedrigen Kollisionskräften eine Auslösung der Überlastschutzeinrichtung gewährleistet ist. Durch eine Ausbildung des Kontaktelementes als den Druckkolben dichtendes Dichtelement kann auf eine zusätzliche Dichtung verzichtet werden, wodurch sich eine konstruktive Vereinfachung der Überlastschutzeinrichtung ergibt. In einer bevorzugten Ausführungsform ist die Dichtwirkung des Kontaktelements für den Druckkolben so ausgelegt, dass bei einer Auslenkung des Werkzeughalters eine Aufhebung der Dichtwirkung für den Druckkolben erzielt wird. Dadurch kann ein besonders spontanes Ansprechen der Überlastschutzeinrichtung bewirkt werden.

Bei einer bevorzugten Ausführungsform der Erfindung ist das Kontaktelement aus einem elastischen Leitmaterial hergestellt. Durch ein elastisches Leitmaterial wird eine zuverlässige elektrische Kontaktierung gegenüber der Schaltfläche sichergestellt, da das Leitmaterial in der Lage ist, mechanische Toleranzen der Oberflächenabschnitte auszugleichen. Als elastische Leitmaterialien kommen insbesondere federelastische Werkstoffe wie Kupfer-Beryllium, Nickel-Titan-Legierungen oder Federstähle in Frage. In einer besonders bevorzugten Ausführungsform der Erfindung ist das Kontaktelement aus einem leitfähigen Elastomermaterial aufgebaut, das insbesondere eine hohe Langzeitstabilität bei erschwerten Umgebungsbedingungen wie hohen Temperaturen und/oder starken Vibrationen aufweist. Als leitfähige Elastomermaterialien können insbesondere metall-, graphit- oder rußgefüllte bzw. -beschichtete Werkstoffe wie Silikon, Perbunan oder Viton verwendet werden.

In Ausgestaltung der Erfindung liegt das Kontaktelement in einem Kontaktzustand mit der Schaltfläche durch die Vorspannkraft elastisch deformiert und flächig auf der Schaltfläche auf. Durch die elastische Deformationen und die flächige Auflage des Kontaktelements ist ein zuverlässiger elektrischer Kontakt mit der Schaltfläche gewährleistet. Abhängig von einer geometrischen Ausgestaltung des Kontaktelements und einer Werkstoffauswahl kann ein Deformationsweg für das Kontaktelement in Abhängigkeit von der Vorspannkraft vorgegeben werden. Damit lassen sich unterschiedliche Schalteigenschaften der Schalteinrichtung hervorrufen, die erheblichen Einfluss auf die zur Auslösung eines Schaltsignals notwendigen Relativbewegungen zwischen Gehäuse und Werkzeughalter haben. Während ein hochelastisches, stark deformierbares Kontaktelement einen großen Deformationsweg aufweist und somit eine größere Relativbewegung zwischen dem Gehäuse und dem Werkzeughalter erfordert, kann ein steiferes Kontaktelement mit geringem Deformationsweg für kurze Schaltwege und damit für ein spontanes Schaltverhalten vorgesehen sein.

In einer bevorzugten Ausführungsform der Erfindung sind die mit der Schalteinrichtung versehenen Oberflächenabschnitte zum Schutz vor Umgebungseinflüssen in einem von dem Gehäuse und/oder dem Werkzeughalter gebildeten Schaltbereich vorgesehen. Dadurch kann sowohl ein Eindringen von Feuchtigkeit oder Schmutzpartikeln, die einen negativen Einfluss auf das Schaltverhalten der Schalteinrichtung haben könnten, als auch ein Eindringen von äußeren Störeinflüssen, insbesondere von elektromagnetischen Wellen reduziert bzw. verhindert werden. Damit kann der Betrieb der Schalteinrichtung auch unter ungünstigen Umgebungsbedingungen langfristig gewährleistet werden.

In weiterer Ausgestaltung der Erfindung ist die Schaltfläche als Leiterplatte mit mehren Leitflächen ausgeführt. Durch die Gestaltung als Leiterplatte kann die Schaltfläche unabhängig vom Gehäuse hergestellt und anschließend in das Gehäuse montierten werden und ermöglicht somit eine individuelle Anpassung an die Erfordernisse der Schalteinrichtung. Als Material für die Schaltfläche werden insbesondere faserverstärkte Kunstharzlaminate mit Metallbeschichtung, beispielsweise kupferkaschierte Platinen eingesetzt. Eine Mehrzahl von Leitflächen kann derart auf der Schaltfläche angeordnet werden, dass in Abhängigkeit von auftretenden Relativbewegungen zwischen Gehäuse und Werkzeughalter unterschiedliche Schaltfunktionen verwirklicht werden können. Dadurch kann über eine reine Erkennung einer Kollision beispielsweise auch eine Erkennung einer Kollisionsrichtung bei geeignet angeordneten Leitflächen vor genommen werden, so dass eine gezielte Reaktion des Handhabungsgerätes erfolgen kann.

Bei einer bevorzugten Ausführungsform der Erfindung sind die Oberflächenabschnitte im wesentlichen orthogonal zu einer Auslöseachse ausgerichtet, die durch eine Wirkverbindung des Gehäuses mit dem Werkzeughalter bestimmt ist. Dadurch kann ein besonders vorteilhaftes Schaltverhalten der Schalteinrichtung erzielt werden, da sowohl bei Kollisionen, die durch Bewegungen der Überlastschutzeinrichtung in Richtung der Auslöseachse hervorgerufen werden und die zu einer linearen Bewegung des Werkzeughalters gegenüber dem Gehäuse führen, als auch bei Bewegungen, die orthogonal zu Auslöseachse erfolgen und die zu einer Kippbewegung des Werkzeughalters gegenüber dem Gehäuse führen, eine zuverlässige Auslösung der Schalteinrichtung gewährleistet ist.

In weiterer Ausgestaltung der Erfindung sind die Leitflächen jeweils kreisringsegmentförmig zur Auslöseachse ausgeführt. Dadurch wird eine Ortsauflösung der Kollision ermöglicht, die in besonders vorteilhafter Weise eine gezielte Reaktion des Handhabungsgerätes hervorrufen kann. Während bei einer Kollision in Richtung der Auslöseachse alle Leitflächen im wesentlichen gleichzeitig elektrischen Kontakt zum Kontaktelement verlieren, wodurch ein spezifisches Schaltsignal hervorgerufen wird, kommt es bei Kollisionen orthogonal zur Auslöseachse zu einer Verkippung des Werkzeughalters gegenüber dem Gehäuse, so dass nur ein Teil der Leitflächen, insbesondere eine Leitfläche, den Kontakt zum Kontaktelement verliert, wodurch ebenfalls ein spezifisches Schaltsignal entsteht. In einer besonders bevorzugten Ausführungsform weisen die kreisringsegmentförmig ausgeführt Leitflächen einen Segmentwinkel von 120 Grad auf, wodurch ein vorteilhafter Kompromiss zwischen einer zuverlässigen elektrischen Kontaktierung und einer für die meisten Anwendungsfälle ausreichenden Ortsauflösung verwirklicht werden kann.

In weiterer Ausgestaltung der Erfindung ist das Kontaktelement als Ringelement ausgeführt. Dadurch wird eine besonders einfache Gestaltung des Kontaktelements ermöglicht, die gleichzeitig eine homogene und gleichförmige Auflage auch für Schaltfläche ermöglicht. Das Ringelement kann dabei kreisförmig, oval oder auch polygon ausgeführt sein wodurch sich in Wirkverbindung mit der Schaltfläche unterschiedliche Schalteigenschaften erzielen lassen. In einer besonders bevorzugten Ausführungsform der Erfindung ist das Kontaktelement kreisförmig gestaltet und koaxial zur Auslöseachse angeordnet.

In weiterer Ausgestaltung der Erfindung ist die das Kontaktelement in einer zumindest abschnittsweise um die Auslöseachse umlaufenden, stirnseitigen Nut des Werkzeughalters angebracht. Dadurch ist auch bei Kippbewegungen zwischen dem Werkzeughalter und dem Gehäuse eine sichere Halterung des Kontaktelements gewährleistet, außerdem verhindert die Nut eine zu starke Deformation des Kontaktelements.

In einer bevorzugten Ausführungsform der Erfindung ist das Kontaktelement in einer Ruheposition des Werkzeughalters für einen elektrischen Kontakt zwischen den Leitflächen der Leiterplatte vorgesehen und für einen Ruhestromfluss zur Störungsdetektion ausgebildet. Dadurch lässt sich in einfacher Weise eine Überwachung der Funktionsbereitschaft der Schalteinrichtung realisieren. Die Schalteinrichtung wird mit einer elektrischen Spannung versorgt, wobei eine Kontaktierung der Leitflächen durch das Kontaktelement derart vorgesehen ist, dass ein Stromfluss über einige oder alle Leitflächen stattfindet. Solange sich der Werkzeughalter in der Ruheposition befindet, d. h. keine äußeren Kräfte auf den Werkzeughalter bzw. das Gehäuse einwirken, die zu einer Relativbewegung über einen Deformationsweg des Kontaktelements hinaus führen, fließt somit ein Ruhestrom, der von einer nachgeschalteten Auswerteeinrichtung detektiert werden kann. Dieser Ruhestrom ist eine notwendige wenngleich nicht hinreichende Bedingung für eine ordnungsgemäße Funktionen der Schalteinrichtung, sollte bei einer derartig ausgeführten und mit Spannung versorgten Schalteinrichtung eine Unterbrechung des Stromflusses vorliegen, kann auf eine Fehlfunktion geschlossen werden. In einer bevorzugten Ausführungsform der Erfindung wird ein Gleichstrom- oder Wechselstromwiderstand der Schalteinrichtung als Qualitätskriterium für den Zustand des Kontaktelements und der Leitflächen herangezogen.

In weiter Ausgestaltung der Erfindung sind Überwachungsmittel zur Überwachung des Ruhestromflusses und zur Störungsdetektion vorgesehen. Die Überwachungsmittel erlauben eine gezielte und individuelle angepasste Überwachung der Schalteinrichtung. Die Überwachungsmittel versorgen die Schalteinrichtung mit einer Ruhespannung, die als konstante oder gepulste Gleichspannung oder Wechselspannung vorgesehen sein kann und prüfen den durch die Ruhespannung hervorgerufen und Stromfluss durch die Schalteinrichtung. Weicht der Stromfluss insbesondere im Hinblick auf Kriterien wie Stromstärke oder Phasenverschiebung von vorgebbaren Sollwerten ab, zu erzeugen die Überwachungsmittel ein Störungssignal, das an eine Auswerteeinheit weitergegeben werden kann. Durch die Überwachungsmittel kann in einfacher Weise eine modulare Austauschbarkeit unterschiedlicher Schalteinrichtungen verwirklicht werden, da unabhängig von der Ausgestaltung der Schalteinrichtung eine normierte Schnittstelle gegenüber der Auswerteeinheit vorgesehen sein kann. In einer bevorzugten Ausführungsform der Erfindung sind die zur Überwachung des Ruhestromflusses und zur Störungsdetektion vorgesehenen Überwachungsmittel inklusive der dazu notwendigen elektronischen Bauelemente insbesondere in der Schalteinrichtung integriert, so dass nur eine Stromversorgung und/oder zumindest eine Signalleitung notwendig ist, um eine vollständige Funktions- und/oder Zustandsüberwachung der Schalteinrichtung zu verwirklichen.

In weiterer Ausgestaltung der Erfindung ist ein Schaltweg der Schalteinrichtung in Axialrichtung des Werkzeughalters gegenüber dem Gehäuse von s < 2mm und/oder ein Schaltwinkel bei Kippbewegungen des Werkzeughalters gegenüber dem Gehäuse von α < 10 Grad vorgesehen. Dadurch kann eine besonders spontane Reaktion der Schalteinrichtung gewährleistet werden, so dass auch ein schnelles Abschalten bzw. eine unmittelbare Bewegungsumkehr der Handhabungseinrichtung zur Vermeidung von Schäden bei einer Kollision mit Gegenständen in der Umgebung sichergestellt ist. Der Schaltweg der Schalteinrichtung ist dabei im wesentlichen von dem Deformationsweg des Kontaktelements bestimmt. Im Hinblick auf den Schaltwinkel ist zusätzlich die geometrische Gestaltung der Leitflächen von Bedeutung, da bei kleineren, auf einen engen Winkelbereich begrenzten Leitflächen ein schnelleres Abheben des Kontaktelements bei einer Kippbewegung des Werkzeughalters gegenüber dem Gehäuse stattfindet. Bei einer besonders bevorzugten Ausführungsform der Erfindung sind das Kontaktelement und/oder die Schaltfläche elastisch aufgehängt, so dass eine Vergrößerung des Schaltwegs bzw. des Schaltwinkels realisiert werden kann, dies ist insbesondere dann von Interesse, wenn vorwiegend Kollisionen mit weichen Gegenständen auftreten können, bei denen zunächst keine Gefahr einer Beschädigung auftritt.

In einer besonders bevorzugten Ausführungsform der Erfindung ist eine Abhängigkeit des Schaltwegs von der Vorspannkraft vorgesehen, dabei ist sowohl eine proportionale als auch eine antiproportionale Beziehung zwischen der Vorspannkraft und dem Schaltweg vorstellbar. Eine derartige Abhängigkeit des Schaltwegs von Vorspannkraft kann insbesondere durch die flexible Aufhängung der Schaltfläche und/oder des Kontaktelements realisiert werden, wobei eine Erhöhung der Vorspannkraft zu einer Verschiebung des Werkzeughalters gegenüber dem Gehäuse und damit zu einer Verlängerung des Schaltweges führen würde.

Weitere Vorteile und Merkmale der Erfindung ergeben sich aus der nachfolgenden Beschreibung eines bevorzugten Ausführungsbeispiels, das anhand der Figuren dargestellt ist. Dabei zeigt
- Fig.1.: eine perspektivische Darstellung einer Überlastschutzeinrichtung in einer Ruheposition,
- Fig.2: eine perspektivische Darstellung einer Schaltfläche für die Überlastschutzeinrichtung gemäß der Fig. 1,
- Fig.3: eine schematische Darstellung der Überlastschutzeinrichtung gemäß Fig.1.

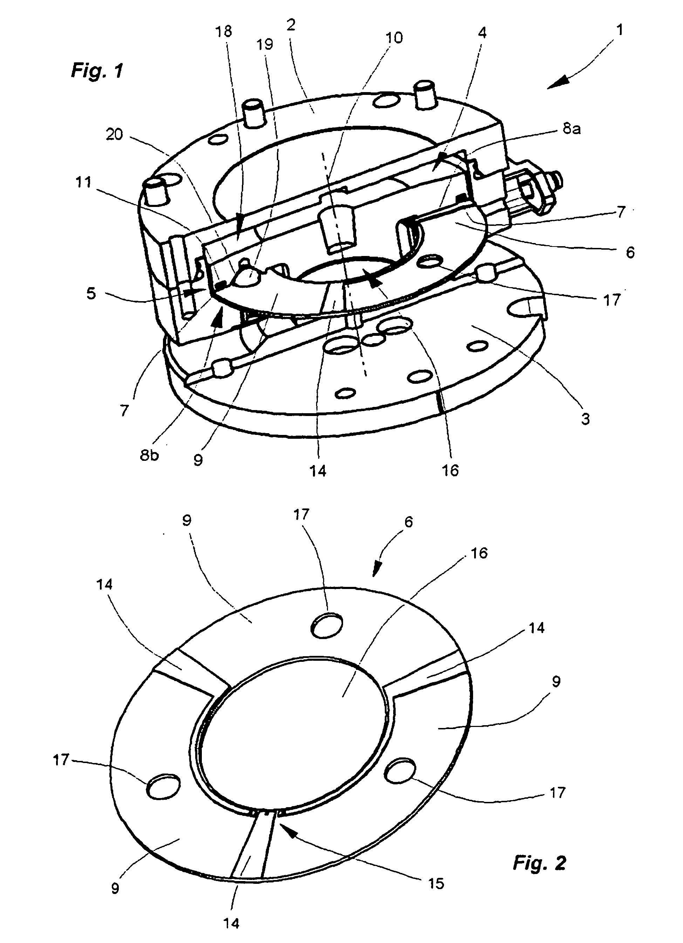

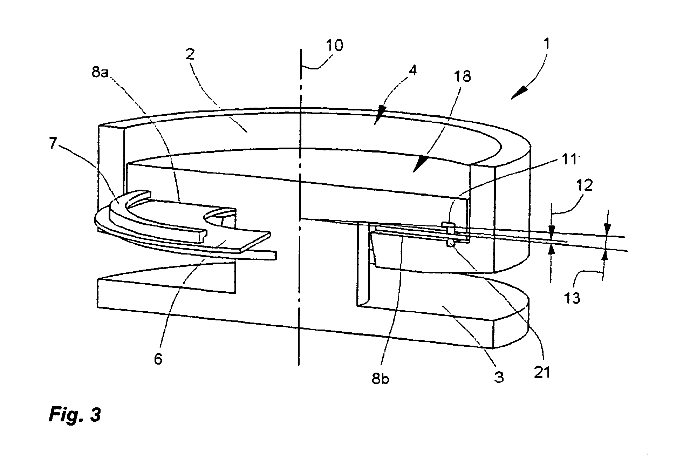

Eine in Fig.1 und Fig.3 dargestellte Überlastschutzeinrichtung 1 weist ein Gehäuse 2, das für eine Befestigung an einem nicht dargestellten Handhabungsgerät, insbesondere einem Industrieroboter, vorgesehen ist, und einen an dem Gehäuse 2 angebrachten Werkzeughalter 3 zur Befestigung eines nicht dargestellten Werkzeugs, insbesondere eines Greifwerkzeugs oder eines Bearbeitungswerkzeugs auf, wobei der Werkzeughalter 3 beweglich an dem Gehäuse 2 angebracht ist. Zwischen Gehäuse 2 und Werkzeughalter 3 ist eine Vorspanneinrichtung 4, die für die Aufbringung einer Vorspannkraft zwischen Gehäuse 2 und Werkzeughalter 3 ausgebildet ist, vorgesehen. Zur Erzeugung eines elektrischen Schaltsignals, das insbesondere zur Beeinflussung des Handhabungsgerätes eingesetzt werden kann, ist eine durch Relativbewegungen zwischen Gehäuse 2 und Werkzeughalter 3 schaltende Schalteinrichtung 5 vorgesehen. Die Schalteinrichtung 5 weist zumindest eine elektrisch leitfähige Schaltfläche 6 und zumindest ein mit der Schaltfläche 6 in elektrischen Kontakt bringbares, leitfähiges Kontaktelement 7 auf. Die Schaltfläche 6 und das Kontaktelement 7 sind an einander zugewandten Oberflächenabschnitten 8a des Werkzeughalters 3 und 8b des Gehäuses 2 ausgebildet.

Das Kontaktelement 7 ist aus einem elastischen Leitmaterial, insbesondere einem mit leitfähigen Partikeln gefüllten und/oder beschichteten und dadurch leitfähigen Elastomermaterial, hergestellt und wird bei dem in Fig. 1 und Fig.3 dargestellten Kontaktzustand durch eine von der Vorspanneinrichtung 4 aufbrachten Vorspannkraft auf die Schaltfläche 6 gedrückt und dadurch elastisch deformiert. Dabei kommt das Kontaktelement 7 flächig auf der Schaltfläche 6 zu liegen und gewährleistet im Kontaktzustand, der einem Ruhezustand der Überlastschutzeinrichtung entspricht, einen stabilen elektrischen Kontakt zwischen dem Kontaktelement 7 und den Leitflächen 9, die in Fig. 1 und Fig.2 näher dargestellt sind. Das Kontaktelement 7 ist in einer stirnseitigen, umlaufenden Nut 11 des Werkzeughalter 3 zumindest teilweise eingebracht und wird dadurch in einer vordefinierten Lage gehalten und vor einer Überlastung durch zu starke Deformation geschützt.

Das Gehäuse 2 und der Werkzeughalter 3 bilden einen im wesentlichen abgeschlossenen Schaltbereich 18, um die Oberflächenabschnitte 8a, 8b der Schalteinrichtung 5 und das Kontaktelement 7 zum Schutz vor Umgebungseinflüssen schützen zu können. Der Schaltbereich 18 des Gehäuses 2 und der daran angepasste, im wesentlichen kolbenartige Abschnitt des Werkzeughalters 3 erlauben eine lineare Relativbewegung in Richtung einer Auslöseachse 10, wobei die Auslöseachse 10 einer Mittellängsachse der im wesentlichen zylindrischen Bohrung im Gehäuse 2 bzw. der im wesentlichen zylindrischen Kontur des im Gehäuse 2 aufgenommenen kolbenartigen Abschnitts des Werkzeughalters 3 entspricht. Der Schaltbereich 18 ist als zylindrische Druckkammer ausgeführt, in der durch Druckbeaufschlagung mit einem insbesondere gasförmigen oder flüssigen Medium mit einer Druckkraft eine Druckkraft auf den kolbenartigen Abschnitt des Werkzeughalters 3 ausgeübt werden kann, die als Vorspannkraft für die Überlastschutzeinrichtung 1 wirksam wird.

Bei geeigneter Ausführung des Gehäuses 2 und des Werkzeughalters 3 ist auch eine Schwenkbewegung als Relativbewegung zwischen Gehäuse 2 und Werkzeughalter 3 möglich, die insbesondere mit der linearen Relativbewegung überlagerbar sein kann. Diese Schwenkbewegung findet im wesentlichen um eine Schwenkachse statt, die in einer orthogonal zur Auslöseachse 10 gelegenen Ebene angeordnet ist.

Die Überlastschutzeinrichtung 1 wird an einem nicht dargestellten Handhabungsgerät zwischen einem insbesondere fremdkraftbetätigten Ausleger des Handhabungsgerätes und einem an dem Handhabungsgerät anzubringenden Werkzeug, insbesondere einem Greif- oder Bearbeitungswerkzeug, eingebaut und mit einer Druckmediumversorgung, insbesondere einer Druckluft- oder Hydraulikmediumversorgung sowie mit einem elektrischen Steuerkabel verbunden. Die Anbringung der Überlastschutzeinrichtung 1 an dem Handhabungsgerät sowie die Anbringung des Werkzeuges an der Überlastschutzeinrichtung kann mit Schraubverbindungen erfolgen, wobei Passstifte an der Überlastschutzeinrichtung 1 für eine eindeutige Positionierung gegenüber dem Handhabungsgerät vorgesehen sind. Durch die Druckmediumversorgung wird der als Druckkammer ausgeführte Schaltbereich 18 mit einem Mediumdruck beaufschlagt, wodurch eine Vorspannkraft zwischen dem Gehäuse und dem kolbenartigen Abschnitt des Werkzeughalters auftritt. Die Vorspannkraft kann damit je nach Betriebszustand der Überlastschutzeinrichtung 1 durch Variation des Mediumdrucks verändert werden. Durch die Vorspannkraft wird das stirnseitig in der Nut 11 des kolbenartigen Abschnitts untergebrachte Kontaktelement 7 auf die Schaltfläche 6 gepresst und elastisch deformiert, wobei ein elektrischer Kontakt zwischen Kontaktelement 7 und den Leitflächen 9 der Schaltfläche 6 hergestellt wird und das Kontaktelement 7 als Dichtelement zwischen dem kolbenartigen Abschnitt und der Schaltfläche 6 wirksam ist. Die Schaltfläche 6 wird über einen in Fig. 1 näher dargestellten Zentrierstift 19 relativ zu einem Zentrierkonus 20, der im Werkzeughalter 3 vorgesehen ist, positioniert. Eine Abdichtung gegenüber der Umgebung wird auch durch den im Gehäuse 2 vorgesehenen O-Ring 21 bewirkt, der in Wirkverbindung mit der Unterseite der Schaltfläche 6 steht. In der Ruheposition des Werkzeughalters 3 gegenüber dem Gehäuse 2 kann ein elektrischer Stromfluss über das Kontaktelement 7 in die Leitflächen 9 vorgesehen sein, wobei das Vorliegen eines Stromflusses über alle Leitflächen 9 als Indikator für eine ordnungsgemäße Funktion der Schalteinrichtung 5 gewertet werden kann. Dazu ist eine nicht dargestellte Auswerteeinheit mit der Schalteinrichtung 5 verbunden, die die Spannungsbeaufschlagung der Schalteinrichtung 5 bewirkt und den dadurch hervorgerufenen Ruhestromfluss detektiert.

Bei Bewegungen des Handhabungsgeräts wirken Beschleunigungen auf das an dem Werkzeughalter 3 angebrachte Werkzeug, die in der Regel nicht zu einem Auslösen der Überlastschutzeinrichtung 1 führen sollen. Daher wird die Vorspannkraft aufgebracht, die eine vorgebbare Mindestkrafteinwirkung auf den Werkzeughalter 3 erfordert, um eine Relativbewegung zwischen Werkzeughalter 3 und Gehäuse 2 hervorrufen zu können. Eine derartige Relativbewegung kann beispielsweise bei einer Kollision des an dem Werkzeughalter 3 angebrachten Werkzeugs mit einem Gegenstand in der Umgebung des Handhabungsgeräts auftreten. Abhängig von einer Kollisionsrichtung wirkt dabei eine Kraft in Richtung der Auslöseachse 10 oder zumindest anteilig orthogonal zur Auslöseachse 10. Dadurch findet entweder eine lineare Schaltbewegung, die durch den in Fig.3 schematisch und exemplarisch dargestellten Schaltweg 12 repräsentiert wird, oder eine gegebenenfalls überlagerte Schwenkbewegung des Werkzeughalters 3, die durch den schematisch und exemplarisch dargestellten Schaltwinkel 13 in Fig.3 repräsentiert wird, gegenüber dem Gehäuse 2 statt. Durch die Relativbewegung zwischen Gehäuse 2 und Werkzeughalter 3 entfernen sich die in den Fig.1 und Fig3 dargestellten, einander gegenüberliegenden, einander zugewandten Oberflächenabschnitte 8a, 8b voneinander, so dass es zu einem teilweisen oder vollständigen Abheben des Kontaktelements 7 von der Schaltfläche 6 kommen kann, wodurch ein Stromfluss zwischen dem Kontaktelement 7 und zumindest einer der Leitflächen 9 unterbrochen wird. Zudem wird durch das Anheben des Kontaktelementes 7 auch die Dichtwirkung mit der Schaltfläche 6 aufgehoben, wodurch ein in der Vorspanneinrichtung aufgebauter Innendruck abgebaut wird und eine besonders schnelle Relativbewegung zwischen Werkzeughalters 3 und Gehäuse 2 stattfinden kann, da die Druckkraft zumindest nahezu vollständig reduziert wird. Die Unterbrechung des Stromflusses wird von der Auswerteeinheit detektiert und kann beispielsweise als Schaltsignal an eine Steuereinrichtung des Handhabungsgeräts weitergegeben werden. Durch die Gestaltung der Schaltfläche mit drei kreisringsegmentartigen Leitflächen wird bei einer Schwenkbewegung des Werkzeughalters 3 das Kontaktelement 7 zunächst nur von einer Leitfläche 9 abgehoben, wodurch sich ein charakteristisches Schaltsignal einstellt. Bei einer linearen Relativbewegung in Richtung der Auslöseachse verlieren hingegen alle Leitflächen 9 im wesentlichen gleichzeitig den Kontakt zum Kontaktelement 7, so dass sich ein anderes, ebenfalls charakteristisches Schaltsignal einstellt. Die Auswerteeinrichtung kann so ausgebildet sein, dass sie diese unterschiedlichen, charakteristischen Schaltsignale zu unterschieden vermag und somit eine Richtungsinformation an die Steuereinrichtung des Handhabungsgerätes abgeben kann, die dann zu einer gezielten Rückzugsbewegung des Handhabungsgerätes entgegen der Kollisionsrichtung führen kann.

Die Schaltfläche 6 ist, wie in Fig. 2 näher dargestellt, als Leiterplatte mit mehreren Leitflächen 9 ausgeführt. Die Leiterplatte weist eine im wesentlichen kreisringförmige Kontur auf und ist an der Oberfläche mit drei, jeweils kreisringsegmentförmig ausgeführten Leitflächen 9 versehen. Von jeder der Leitflächen 9 führt eine durch Isolationsmaterial abgedeckte Leitbahn 14 zu einer Kontaktstelle 15 an der Unterseite der Leiterplatte, wo ein nicht dargestellter, elektrischer Kabelanschluss bzw. eine Steckverbindung vorgesehen sein kann. Die Schaltfläche 6 ist hinsichtlich ihrer Außenkontur auf das Gehäuse 2 abgestimmt, die Mittenbohrung 16 ist für einen Durchtritt des Werkzeughalters 3 vorgesehen, während die Zentrierbohrungen 17 für eine Wirkverbindung mit im Gehäuse 2 vorgesehenen, in Fig. 2 nicht dargestellten Passstiften zur Positionierung der Leiterplatte ausgebildet sind.

## Patentansprüche

1. Überlastschutzeinrichtung (1) mit einem Gehäuse (2), das für eine Befestigung an einem Handhabungsgerät vorgesehen ist, mit einem Werkzeughalter (3) zur Befestigung eines Werkzeugs, der beweglich an dem Gehäuse angebracht ist, mit einer Vorspanneinrichtung (4) zur Erzeugung einer Vorspannkraft zwischen Gehäuse und Werkzeughalter, wobei die Vorspanneinrichtung als Kolbenanordnung mit einem Druckkolben ausgebildet ist, der über ein Medium beaufschlagbar ist, und mit einer durch Relativbewegungen zwischen Gehäuse und Werkzeughalter schaltenden Schalteinrichtung (5), die zumindest eine elektrisch leitfähige Schaltfläche (6) und zumindest ein mit der Schaltfläche in elektrischen Kontakt bringbares, elektrisch leitfähiges Kontaktelement (7) aufweist, wobei die Schaltfläche (6) und das Kontaktelement (7) an einander zugewandten Oberflächenabschnitten (8) des Werkzeughalters und des Gehäuses vorgesehen sind, **dadurch gekennzeichnet, dass** das Kontaktelement (7) als ein den Druckkolben gegenüber der Schaltfläche (6) wenigstens abschnittsweise abdichtendes Dichtelement ausgebildet ist.

2. Überlastschutzeinrichtung nach Anspruch 1, **dadurch gekennzeichnet, dass** das Kontaktelement (7) aus einem elastischen Leitmaterial, insbesondere einem leitfähigen Elastomermaterial, hergestellt ist.

3. Überlastschutzeinrichtung nach Anspruch 1 oder 2, **dadurch gekennzeichnet, dass** das Kontaktelement (7) in einem Kontaktzustand mit der Schaltfläche durch die Vorspannkraft elastisch deformiert und flächig auf der Schaltfläche aufliegt.

4. Überlastschutzeinrichtung nach einem der vorhergehenden Ansprüche, **dadurch gekennzeichnet, dass** die mit der Schalteinrichtung versehenen Oberflächenabschnitte zum Schutz vor Umgebungseinflüssen in einem von dem Gehäuse und/oder dem Werkzeughalter gebildeten Schaltbereich (18) vorgesehen sind.

5. Überlastschutzeinrichtung nach einem der vorhergehenden Ansprüche, **dadurch gekennzeichnet, dass** die Schaltfläche als Leiterplatte mit mehreren Leitflächen (9) ausgeführt ist.

6. Überlastschutzeinrichtung nach einem der vorhergehenden Ansprüche, **dadurch gekennzeichnet, dass** die Oberflächenabschnitte im wesentlichen orthogonal zu einer Auslöseachse (10) ausgerichtet sind, die durch eine Wirkverbindung des Gehäuses mit dem Werkzeughalter bestimmt ist.

7. Überlastschutzeinrichtung nach Anspruch 4 oder 5, **dadurch gekennzeichnet, dass** die Leitflächen jeweils kreisringsegmentförmig, insbesondere mit einem Segmentwinkel von 120 Grad, zur Auslöseachse ausgeführt sind.

8. Überlastschutzeinrichtung nach einem der vorhergehenden Ansprüche, **dadurch gekennzeichnet, dass** das Kontaktelement (7) als Ringdichtelement ausgeführt und insbesondere koaxial zur Auslöseachse angeordnet ist.

9. Überlastschutzeinrichtung nach einem der vorhergehenden Ansprüche, **dadurch gekennzeichnet, dass** das Kontaktelement (7) in einer zumindest abschnittsweise um die Auslöseachse umlaufenden, stirnseitigen Nut (11) des Werkzeughalters angebracht ist.

10. Überlastschutzeinrichtung nach einem der vorhergehenden Ansprüche, **dadurch gekennzeichnet, dass** das Kontaktelement in einer Ruheposition des Werkzeughalters für einen elektrischen Kontakt zwischen den Leitflächen der Leiterplatte vorgesehen und für einen Ruhestromfluss zur Störungsdetektion ausgebildet ist.

11. Überlastschutzeinrichtung nach Anspruch 10, **dadurch gekennzeichnet, dass** Überwachungsmittel zur Überwachung des Ruhestromfluss und zur Störungsdetektion vorgesehen sind.

12. Überlastschutzeinrichtung nach einem der vorhergehenden Ansprüche, **dadurch gekennzeichnet, dass** ein Schaltweg der Schalteinrichtung in Axialrichtung des Werkzeughalters gegenüber dem Gehäuse von s < 2mm und/oder ein Schaltwinkel bei Kippbewegungen des Werkzeughalters gegenüber dem Gehäuse von α < 10 Grad vorgesehen ist.

## Claims

1. Overload protection device (1) comprising a housing (2) designed for mounting to a manipulation device, with a tool holder (3) for mounting a tool, which is movably disposed on the housing, a pretensioning means (4) for generating a pretensioning force between the housing and the tool holder, wherein the pretensioning means is designed as a piston arrangement with a pressure piston which can be loaded by a medium, and a switching unit (5) that operates in response to relative motion between the housing and the tool holder, wherein the switching unit has at least one electrically conducting switching surface (6) and at least one electrically conducting contact element (7) which can be brought into electric contact with the switching surface, wherein the switching surface (6) and the contact element (7) are provided on mutually facing surface sections (8) of the tool holder and the housing, **characterized in that** the contact element (7) is designed as a sealing element which seals the pressure piston, at least in sections, relative to the switching surface (6).

2. Overload protection device according to claim 1, **characterized in that** the contact element (7) is produced from an elastic conducting material, in particular, a conducting elastomeric material.

3. Overload protection device according to claim 1 or 2, **characterized in that** the contact element (7) is elastically deformed by the pretensioning force and is flatly supported on and in contact with the switching surface.

4. Overload protection device according to any one of the preceding claims, **characterized in that** the surface sections having the switching unit provide protection from ambient influences in a switching area (18) formed by the housing and/or the tool holder.

5. Overload protection device according to any one of the preceding claims, **characterized in that** the switching surface is designed as a printed board having several conducting surfaces (9).

6. Overload protection device according to any one of the preceding claims, **characterized in that** the surface sections are aligned substantially orthogonally relative to a trigger axis (10) which is determined by an operative connection between the housing and the tool holder.

7. Overload protection device according to claim 4 or 5, **characterized in that** each conducting surface is circular ring segment-shaped, in particular, having a segment angle of 120° relative to the trigger axis.

8. Overload protection device according to any one of the preceding claims, **characterized in that** the contact element (7) is designed as an annular sealing element and is disposed, in particular, coaxially to the trigger axis.

9. Overload protection device according to any one of the preceding claims, **characterized in that** the contact element (7) is mounted in a front end groove (11) of the tool holder, which extends, at least in sections, about the trigger axis.

10. Overload protection device according to any one of the preceding claims, **characterized in that**, in a neutral position of the tool holder, the contact element is provided for an electric contact between the conducting surfaces of the printed board, and is designed for neutral current flow to detect disturbances.

11. Overload protection device according to claim 10, **characterized in that** monitoring means are provided for monitoring the neutral current flow and for detecting disturbances.

12. Overload protection device according to any one of the preceding claims, **characterized in that** a switching path of the switching unit of s<2mm is provided in an axial direction of the tool holder relative to the housing and/or a switching angle of α<10° is provided for tilting motions of the tool holder relative to the housing.

## Revendications

1. Dispositif de protection contre les surcharges (1) comportant un boîtier (2), lequel est prévu pour une fixation sur un appareil de manipulation, un porte-outil (3) pour la fixation d'un outil, lequel porte-outil est monté de manière mobile sur le boîtier, un dispositif de précontrainte (4) afin de produire une force de précontrainte entre le boîtier et le porte-outil, le dispositif de précontrainte étant réalisé sous forme d'agencement à piston ayant un piston de pression, lequel peut être alimenté par un fluide, et un dispositif de commutation (5) commutant par des mouvements relatifs entre le boîtier et le porte-outil, lequel présente au moins une surface de commutation (6) électroconductrice et au moins un élément de contact (7) électroconducteur pouvant être amené en contact électrique avec la surface de commutation, la surface de commutation (6) et l'élément de contact (7) étant prévus sur des parties de surface (8) tournées l'une vers l'autre du porte-outil et du boîtier, **caractérisé en ce que** l'élément de contact (7) est réalisé sous la forme d'un élément d'étanchéité rendant le piston de pression étanche au moins par endroits par rapport à la surface de commutation (6).

2. Dispositif de protection contre les surcharges selon la revendication 1, **caractérisé en ce que** l'élément de contact (7) est fabriqué dans un matériau conducteur élastique, en particulier un matériau en élastomère conducteur.

3. Dispositif de protection contre les surcharges selon la revendication 1 ou 2, **caractérisé en ce que** l'élément de contact (7), dans un état de contact avec la surface de commutation, est élastiquement déformé par la force de précontrainte et repose de toute sa surface sur la surface de commutation.

4. Dispositif de protection contre les surcharges selon l'une des revendications précédentes, **caractérisé en ce que** les parties de surface pourvues du dispositif de commutation sont prévues dans une zone de commutation (18) formée par le boîtier et/ou le porte-outil pour la protection contre les influences de l'environnement.

5. Dispositif de protection contre les surcharges selon l'une des revendications précédentes, **caractérisé en ce que** la surface de commutation est réalisée en tant que carte à circuits imprimés ayant plusieurs surfaces conductrices (9).

6. Dispositif de protection contre les surcharges selon l'une des revendications précédentes, **caractérisé en ce que** les parties de surface sont orientées essentiellement orthogonalement à un axe de déclenchement (10), qui est déterminé par une liaison active du boîtier avec le porte-outil.

7. Dispositif de protection contre les surcharges selon la revendication 4 ou 5, **caractérisé en ce que** les surfaces conductrices sont réalisées en forme de segments d'anneau de cercle, en particulier avec un angle de segment de 120 degrés, par rapport à l'axe de déclenchement.

8. Dispositif de protection contre les surcharges selon l'une des revendications précédentes, **caractérisé en ce que** l'élément de contact (7) est réalisé sous forme d'élément d'étanchéité circulaire et est en particulier agencé de manière coaxiale à l'axe de déclenchement.

9. Dispositif de protection contre les surcharges selon l'une des revendications précédentes, **caractérisé en ce que** l'élément de contact (7) est monté dans une rainure (11) du porte-outil située du côté frontal et entourant, au moins par endroits, l'axe de déclenchement.

10. Dispositif de protection contre les surcharges selon l'une des revendications précédentes, **caractérisé en ce que** l'élément de contact est prévu, dans une position de repos du porte-outil, pour un contact électrique entre les surfaces conductrices de la carte à circuits imprimés et est réalisé pour un flux de courant permanent afin de détecter les dysfonctionnements.

11. Dispositif de protection contre les surcharges selon la revendication 10, **caractérisé en ce qu'**il est prévu des moyens de surveillance afin de surveiller le flux de courant permanent et de détecter les dysfonctionnements.

12. Dispositif de protection contre les surcharges selon l'une des revendications précédentes, **caractérisé en ce qu'**il est prévu une longueur de course de commutation du dispositif de commutation dans le sens axial du porte-outil par rapport au boîtier de s < 2 mm et/ou un angle de commutation de α < 10 degrés dans le cas de mouvements de pivotement du porte-outil par rapport au boîtier.
